# EUROPEAN PATENT APPLICATION

(11) **EP 2 416 508 A2**
(43) Date of publication of application: **08.02.2012**
(21) Application number: 11174807.5
(22) Date of filing: 21.07.2011
(51) Int. Cl.: H04J 3/06, H04W 56/00

(54) **Synchronization for data transfer between physical layers**

(30) Priority: 03.08.2010 US 849174
(71) Applicant: NXP Semiconductors B.V., 5656 AG Eindhoven (NL)
(72) Inventor: Thoen, Steven, Redhill, Surrey RH1 1DL (GB); Philips, Norbert, Redhill, Surrey RH1 1DL (GB); Claessens, Valentin, Redhill, Surrey RH1 1DL (GB)
(74) Representative: Hardingham, Christopher Mark

(57) **Abstract**

Various embodiments relate to a system and related method that enable transfer of control and data messages in a wireless communication network between devices operating on different physical layers (PHY). Control data and/or isochronous data and/or asynchronous data may be transferred between devices that operate on different physical layers through a bridging device, while minimizing latency and buffering. The bridging device may contain interfaces that may operate on each of the respective physical layers. A first interface may receive a first superframe from a device in a first physical layer (PHY1) and may generate an equivalent second superframe to transmit to a second device on a second physical layer (PHY2). The bridging device may also synchronize the time slots and reference clocks for communication protocols on each physical layer to further minimize latency and buffering during the transfer of control and data messages via communication frames within these superframes.

## Description

### TECHNICAL FIELD

Various exemplary embodiments disclosed herein relate generally to wireless communication and communications protocol.

### BACKGROUND

In a wireless communications network, data may be transferred between devices using different formats or using different layers of a communications protocol. This transfer of communications over different protocols or layers may occur, for example, when devices are adapted to run different communications protocols (e.g., Asynchronous Transfer Mode, Multiprotocol Label Switching, etc.). This may also occur in instances where the devices are in different layers. For example, using the Open System Interconnection (OSI) model for a communications system, one device may operate on a different physical layer from another device, where the physical layer (PHY) is the lowest layer of the OSI model. In some instances, these different physical layers may have different channel rates.

Due to a difference in channel rates, for certain applications, data received from a different physical layer may need to be buffered by the device receiving the data. In addition, data sent to the different physical layer may only be forwarded to the physical layer of the destination device when a Time Division Multiple Access (TDMA) slot in the frequency channel for the destination device is available. The required buffer size for the system may be dependent on the distribution of TDMA slots for the frequency channels used at the source and destination devices in the respective physical layers. The distribution of TDMA slots may not only affect the desired buffer size, but may also introduce non-negligible latency into such inter-layer transfers, as the TDMA slots at either the source or destination device may not align with the frame size used to transfer data.

For example, the Bluetooth wireless standard for data exchange in mobile devices includes a method to send and receive control signals and data (e.g., voice, text, etc.) to another physical layer. However, the Bluetooth wireless standard discloses transfers between the different physical layers that are not synchronized with each other. Due to the other requirements of the standard, the resultant buffer size and latency associated with the asynchronous transfer may be acceptable, as the standard uses small frame sizes during communication. However, other wireless networks may have different design requirements, which may include, for example, a requirement of larger frames or lower latencies, as it is the case for wireless hearing aid devices.

In view of the foregoing, it would be desirable to reduce latency in wireless communications. In particular, it would be desirable to coordinate the transfer of data between physical layers.

### SUMMARY

In light of the present need for efficient transfer of communication between physical layers, a brief summary of various exemplary embodiments is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in the later sections.

Various embodiments may relate to a bridging device that enables communications between at least two physical layers (PHY). The bridging device may comprise a first interface operating in a first physical layer (PHY1) that communicates with a first communication device (D1) in a first cluster (C1) operating in the PHY1 and a second interface operating in a second physical layer (PHY2) that communicates with a second communication device (D2) in a second cluster (C2) operating in the PHY2.

The bridging device may also comprise a superframe timing processor. The superframe timing processor may comprise a first superframe interface that receives a first superframe comprising first data and first superframe timing information from the first interface. The superframe timing processor may also comprise a superframe handler that extracts the first superframe timing information from the first superframe and generates a second superframe comprising second superframe timing information, wherein the second superframe is synchronized with the first superframe and the second superframe timing information is equivalent to the first superframe timing information. The superframe timing processor may also comprise a second superframe interface that forwards the second superframe to the second interface, wherein the second superframe is synchronized in frequency and phase with the first superframe.

Various embodiments may also relate to a system that enables communication between at least two physical (PHY) layers. The system may comprise a first communication device (D1) in a first cluster (C1) operating in a first physical layer (PHY1) and a second communication device (D2) in a second cluster (C2) operating in a second physical layer (PHY2).

The system may also comprise a bridging device operating in both PHY1 and PHY2 and capable of communication with D1 in PHY1 and D2 in PHY2. The bridging device may comprise a first interface operating in PHY1 that communicates with D1 and a second interface operating in PHY2 that communicates with D2. The bridging device may also comprise a super frame timing processor. The superframe timing processor may comprise a first superframe interface that receives a first superframe comprising first data and first superframe timing information from the first interface. The superframe timing processor may also comprise a superframe handler that extracts the first superframe timing information from the first superframe and generates a second superframe comprising second superframe timing information, wherein the second superframe is synchronized with the first superframe and the second superframe timing information is equivalent to the first superframe timing information. The superframe timing processor may also comprise a second superframe interface that forwards the second superframe to the second interface, wherein the second superframe is synchronized in frequency and phase with the first superframe.

Various embodiments may also relate to a method of a bridging device enabling communication between at least two physical layers (PHY). The method may comprise receiving, by a first superframe interface in a superframe timing processor, a first superframe comprising first data and first super frame timing information from a first interface operating in a first physical layer (PHY1) that communicates with a first communication device (D1) in a first cluster (C1) operating in the PHY1. The method may also comprise extracting, by a superframe handler in the superframe timing processor, the first superframe timing information from the first superframe. The method may also comprise generating, by the superframe handler, a second superframe comprising second superframe timing information synchronized with the first superframe, wherein the second superframe timing information is equivalent to the first superframe timing information. The method may also comprise forwarding, by a second superframe interface in the superframe timing processor, a second superframe to a second interface operating in a second physical layer (PHY2) that communicates with a second communication device (D2) in a second cluster (C2) operating in the PHY2.

It should be apparent that, in this manner, various exemplary embodiments enable synchronous transfer of information between devices in clusters in different physical layers. Particularly, by generating associated superframes on the relevant physical layers, latency and required buffer sizes may be lowered due to coordinating the TDMA slots of different physical layers.

### BRIEF DESCRIPTION OF THE DRAWINGS

In order to better understand various exemplary embodiments, reference is made to the accompanying drawings wherein:
FIG. 1A illustrates an exemplary wireless communications system and applicable audio streams between devices;
FIG. 1B illustrates an exemplary wireless communications system and applicable data streams between devices
FIG. 2A illustrates an exemplary wireless communications system, including a mobile phone and applicable data and audio streams;
FIG. 2B illustrates an exemplary wireless communications system, including a music center and applicable audio and data streams;
FIG. 2C illustrates an exemplary wireless communications system, including a programming station and applicable data and isochronous streams;
FIG. 2D illustrates an exemplary wireless communications system, including a remote control and applicable data and audio streams at a close range;
FIG. 2E illustrates an exemplary wireless communications system, including a remote control and applicable data and audio streams at a long range;
FIG. 3A illustrates an exemplary wireless communications system using multiple clusters in different physical layers;
FIG. 3B illustrates an exemplary wireless communications system using a single cluster in the same physical layer;
FIG. 3C illustrates an exemplary wireless communications system using multiple clusters in different physical layers;
FIG. 4A illustrates an exemplary wireless device including a link controller and a host controller;
FIG. 4B illustrates an exemplary wireless processing core and components;
FIG. 5 illustrates an exemplary functional block diagram of the wireless link controller;
FIG. 6A illustrates an exemplary superframe structure of the MAC protocol;
FIG. 6B illustrates exemplary MAC frame formats for the MAC protocol;
FIG. 7 illustrates the service flow of service primitives between peer protocol entities;
FIG. 8 illustrates an exemplary use case for communication between clusters; and
FIG. 9 illustrates an exemplary MAC frame structure for frame segmentation in a heterogeneous network.

### DETAILED DESCRIPTION

Referring now to the drawings, in which like numerals refer to like components or steps, there are disclosed broad aspects of various exemplary embodiments.

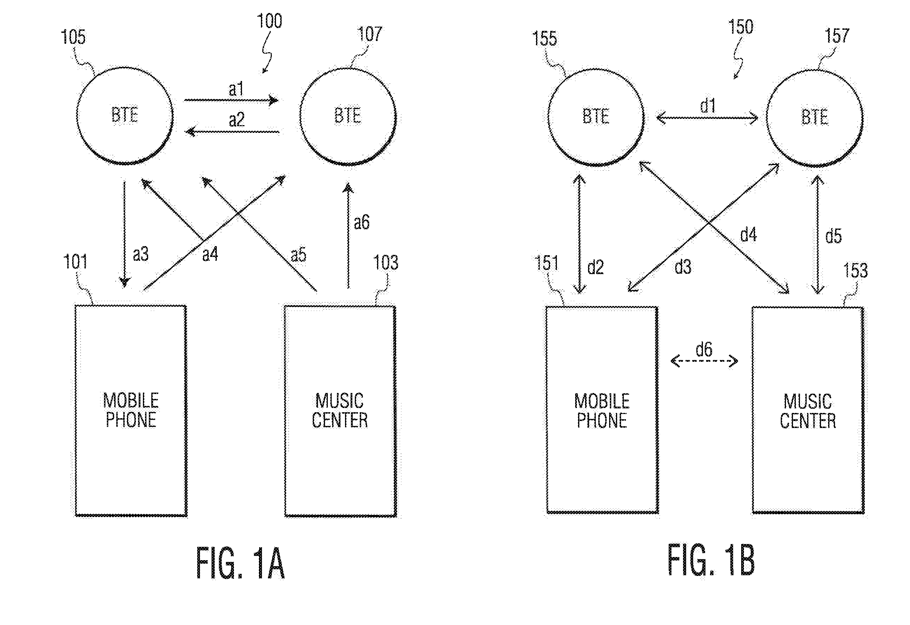

FIG. 1A illustrates an exemplary wireless communications system and applicable audio streams between devices. Wireless communications system 100 may be a wireless communications system that transmits data, audio, and/or control signals between various devices, such as a mobile phone 101, a music center 103, and behind-the-ear (BTE) hearing instruments 105, 107. In some embodiments, each of the devices 101-107 may include an integrated wireless hearing aid transceiver and an integrated wireless protocol handler.

Mobile phone 101 may be a mobile communications device capable of voice communications using at least one communications protocol. In some embodiments, the mobile phone 101 may communicate with a plurality of communications networks, such as a public switched telephone network (PSTN), or packet data network. In some embodiments, the mobile phone 101 may convert received audio packets into an audio stream before transmission to other devices.

Music center 103 may be a device that transmits audio signals to the BTEs 105, 107. In some embodiments, both the music center 103 and the mobile phone 101 may be present. Music center 103 may be, for example, a stationary or mobile device that transmits audio, such as a general desktop or laptop computer capable of transmitting multimedia, or portable music player or mobile device capable of transmitting audio. In some embodiments, the music center 103 may store the audio in an internal memory. In other embodiments, the music center 103 may stream audio received from another device.

BTEs 105, 107 may be "behind-the-ear" (BTE) hearing instruments or similar hearing aids that receive audio signals. Wireless communications system 100 may also include similar hearing aids, such as headphones, removable hearing aids, wireless headsets, and similar wireless hearing aid devices for a user. In the illustrative embodiment, BTE 105 and BTE 107 do not have a wired connection and may therefore transmit audio streams a1, a2 through the wireless communications system 100. For example, in a binaural setup BTE 105 may transmit microphone signal a1 to BTE 107, while BTE 107 may transmit microphone signal a2 to BTE 105.

In an exemplary embodiment, audio streams a1-a6 may be transmitted between the devices 101-107 in the wireless communications system 100. For example, the audio stream a1, which may comprise the microphone signal, may be sent from the BTE 105 to the BTE 107. Similarly, the music center 103 may transmit audio streams a5, a6 to the BTEs 105, 107. Alternatively, the mobile phone 101 may transmit the audio stream a4 to both the BTEs 105, 107. Audio streams a1-a6 may be time-bounded in order, for example, for BTEs 105, 107 to receive equivalent audio streams synchronously. For example, the music center 103 may transmit the audio streams a5, a6 to the BTEs 105, 107. In some embodiments, audio streams a5, a6 may be equivalent. In such instances, music center 103 may adjust the transmission of the audio streams a5 and/or a6 in order for the BTEs 105, 107 to receive the audio streams simultaneously.

FIG. 1B illustrates an exemplary wireless communications system and applicable data streams between devices. Wireless communications system 150 may contain the same constituent devices 151-157 as the devices 101-107 of the wireless communications system 100. Devices 151-157 may transmit data streams d1-d6 between devices in a similar manner as audio streams a1-a6. Wireless communications systems 100, 150 may employ a protocol that may support transmission of the audio streams a1-a6 and the data streams (i.e., data channels) d1-d6 simultaneously. Wireless communications systems 100, 150 may contain, next to the mobile phone 101, music center 103, and/or BTEs 105, 107, also other wireless devices. Wireless communications systems 100, 150 may also contain a remote control (not shown) and/or a programming station (not shown).

A remote control may act similarly to the mobile phone 151 in wireless communications system 150, as it may be a mobile device capable of transmitting data streams to BTEs 155, 157. In some embodiments, the remote control may receive data streams from the BTEs 155, 157 and/or music center 153. The remote control may also receive data streams from the programming station (not shown).

A programming station (not shown) may be similar to the music center 153 in the wireless communications network 150. The programming station may be a stationary or mobile device capable of sending data streams to the BTEs 155, 157 and/or mobile phone 151. The programming station may also receive data streams from any of these devices. In some embodiments, the programming station may also transmit or receive data from the remote control (not shown).

In an exemplary embodiment, the mobile phone may establish the data streams d2, d3 with BTE 155 and BTE 157, respectively. In some embodiments, the data channel d1 may be a bi-directional asynchronous data channel and may be used to set up a wireless link (for example, for additional data channels and/or audio streams), monitor the Quality of Service (QoS) of the wireless link, and exchange user interface (UI) information. In some embodiments, the data channel d1 may also be used by the BTEs 155, 157 to synchronize audio processing algorithms in BTEs 155, 157 for the audio received through the established audio streams. BTEs 155, 157 may also employ error checking, retransmission, and latency control procedures to ensure data integrity and to synchronize parameter updates. In some embodiments, one of the BTEs 155, 157 may set up the wireless network for both the BTEs 155, 157. In alternative embodiments, mobile phone 151 or music center 153 may set up the wireless network.

In some embodiments, the data channels may be established to function at low rates. For example, a programming station may establish a low-rate data channel for the transmission and reception of user interface information, link status, and/or control of the BTEs 155, 157. Alternatively, high-rate data channels may also be established for other applications, e.g., a firmware upgrade. In some embodiments, the data channels are not time-bounded and may be transmitted asynchronously.

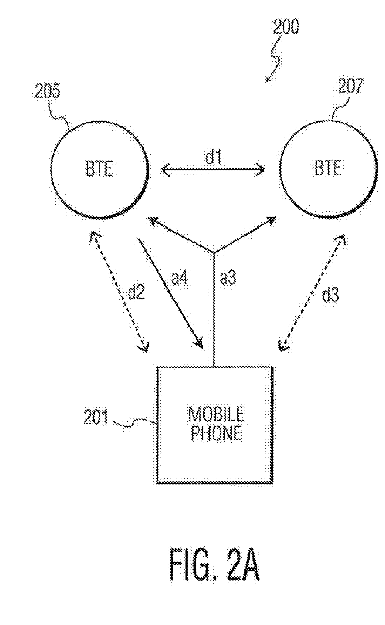

FIG. 2A illustrates an exemplary wireless communications system, including a mobile phone and applicable data and audio streams. Wireless communications system 200 may be similar to the wireless communications systems 100, 150 and may include similar constituent components, with mobile phone 201 corresponding to the mobile phones 101, 151 and the BTEs 205, 207 corresponding to the BTEs 105, 155, 107, 157.

In the illustrative embodiment, the mobile phone 201 may receive an incoming call and may attempt to join a network setup between BTE 205 and BTE 207. In some embodiments, a binaural setup may already be established between the BTE 205 and the BTE 207. In such an instance, the data streams need to be reconfigured and the audio streams a1, a2 may be temporarily suspended. Audio stream a3 may be used by the mobile phone 201 to transmit audio to the BTEs 205, 207. Similarly, the audio stream a4 may be used to transmit audio from a microphone included in the BTE 205 to the mobile phone 201.

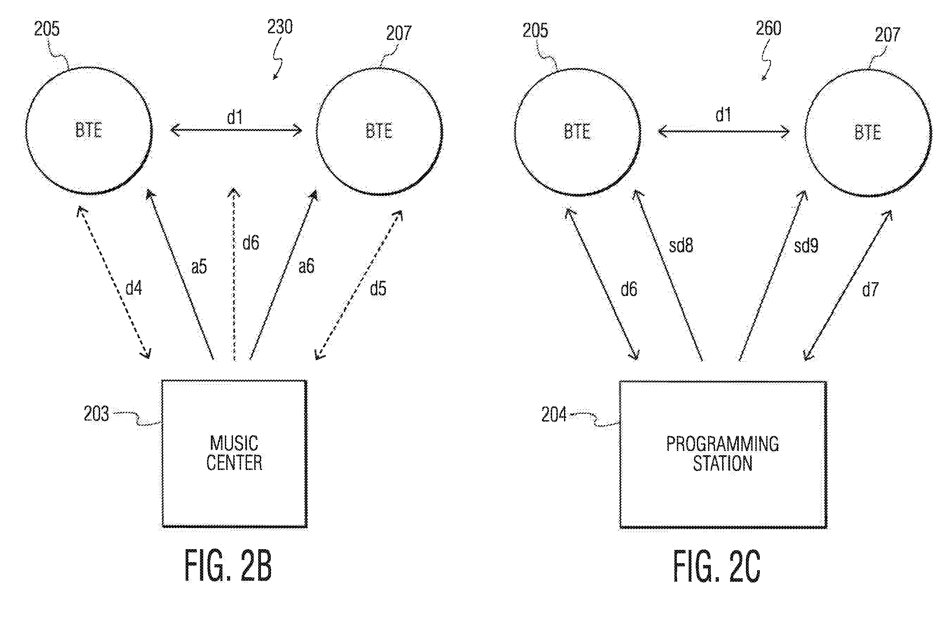

In some embodiments, asynchronous data connections between all three devices 201-207 may be implemented through data channels d1-d3. These asynchronous data channels may be used to allow UI communication between the mobile phone 201 and the BTEs 205, 207 and between the BTE 205 and the BTE 207. FIG. 2B illustrates an exemplary wireless communications system, including a music center and applicable audio and data streams. Wireless communications system 230 is similar to wireless communications system 200, with music center 203 included in lieu of the mobile phone 203. In this embodiment, the music center 203 uses two audio channels to stream audio to the BTEs 205, 207. Audio stream a5 connects the music center 203 to the BTE 205, while the audio stream a6 connects the music center 203 to the BTE 207.

In some embodiments, the music center 203 may establish separate data channels d4, d5 to establish bi-directional data streams with BTE 205 and BTE 207, respectively. This may be done to, for example, allow UI communication between the music center 203 and the BTEs 205, 207. In alternative embodiments, the music center 203 may operate in transmit-only mode. This may involve only setting up the audio streams a5, a6. In some embodiments, this may also include setting up uni-directional data channel d6, which may be transmitted to both BTEs 205, 207.

FIG. 2C illustrates an exemplary wireless communications system, including a programming station and applicable data and isochronous streams. Wireless communications system is similar to wireless communications system 200, 230, with a programming station 204 present instead of a mobile phone 201 or music center 203. Programming station 204 may in some embodiments implement a user interface function. Programming station 204 may send isochronous data streams sd8 and sd9, which may contain both audio and data, to the BTEs 205, 207. Programming station 204 may deliver the isochronous streams sd8, sd9 with a controlled latency. Asynchronous data signals d6, d7 may be used to, for example, provide feedback from the BTEs 205, 207 to the programming station 204.

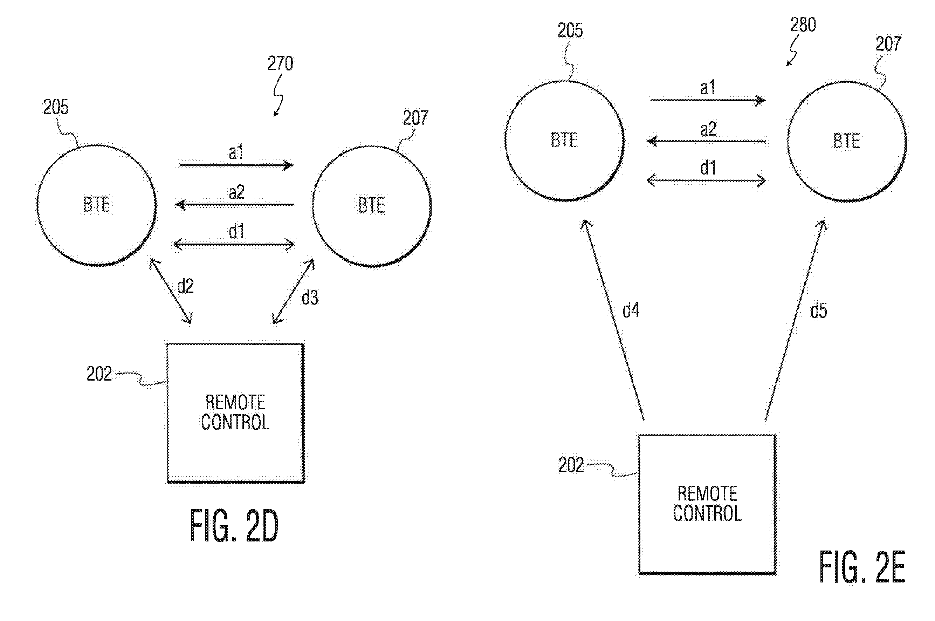

FIG. 2D illustrates an exemplary wireless communications system, including a remote control and applicable data and audio streams at a close range. Wireless communications system 270 is similar to wireless communications systems 200, 230, 260, with a remote control 202 present instead of a mobile phone 201, music center 203, or programming station 204. In some embodiments, the remote control 202 is used to implement a user interface function.

In wireless communications system 270, the remote control 202 may be in close range with the BTEs 205, 207 and may therefore be in the same network as the two devices. In some embodiments, the remote control may set up bi-directional data channels d2, d3 with the BTEs 205, 207. In some embodiments, the audio streams a1, a2 and the bi-directional data channel d1 may already have been set up before the remote control established data channels d2, d3. In alternative embodiments, the remote control sets up all signals, including the audio streams a1, a2 and the data channels d1-d3, simultaneously. In some embodiments, the remote control 202 may join a network including BTEs 205, 207 upon entering the service area of an existing and active network between the BTEs 205, 207. Upon entering the active network, the remote control may attempt to establish a bi-directional communication link with both hearing aids.

FIG. 2E illustrates an exemplary wireless communications system including a remote control with a large transmission range and applicable data and audio streams between BTE devices 205 and 207. Wireless communications system 280 is similar to wireless communications system 270, with the same constituent components 202-207. However, the remote control 202 in wireless communications system 280 may be further from the BTEs 205, 207 than the remote control 202 of FIG. 2D. As a result the remote control of FIG. 2E may be out of the network from the BTEs 205, 207.

In some embodiments, when the remote control 202 is out of network range, the remote control may use more transmission power than remote control 202 of the wireless communications network 270 (or devices in the wireless communications networks 200, 230, 260). Due to the increased transmission power in the remote control, the BTEs 205, 207 may receive signals from the remote control 202, but the remote control 202 may not receive signals from the BTEs 205, 207. Remote control 202 may therefore establish uni-directional data channels d4, d5 with the BTEs 205, 207. In some embodiments, the audio streams a1, a2 and the bi-directional data channel d1 may already have been set up before the remote control established data channels d4, d5.

When a bi-directional remote control 202 does not detect any existing hearing aid network, such as the system 270, there might nevertheless be devices, such as BTEs 205, 207 within its transmit range. Remote control 202 may use a wireless protocol that includes mechanisms to transmit commands from the remote control to the BTEs 205, 207 with a minimum of interference to any applications running in the existing, active network including the BTEs 205, 207 and with a reasonable reaction time. In some embodiments, the reasonable reaction time may be under 200 ms. When the BTEs 205, 207 detects messages from the remote control 202, the BTEs 205, 207 may try to get in sync with the signal transmitted by the remote control so that they can receive the command messages from it.

In some embodiments, the remote control 202 may move away from the BTEs 205, 207 and may therefore transition from wireless communications system 270 to wireless communications system 280. Remote control 202 may still be able to send commands to both BTEs 205, 207 based on the last known network configuration and frame timing of the hearing aid network.

Various embodiments may also involve multiple devices 201-204 included in an active network including the BTEs 205, 207. This may, for example, include a remote control 202 in use with the mobile phone 201, music center 203, and/or programming station 204. In some embodiments, the remote control 202 may be combined with the music center 203 and/or programming station 204 in a single, wireless assistant (WA) device (not shown).

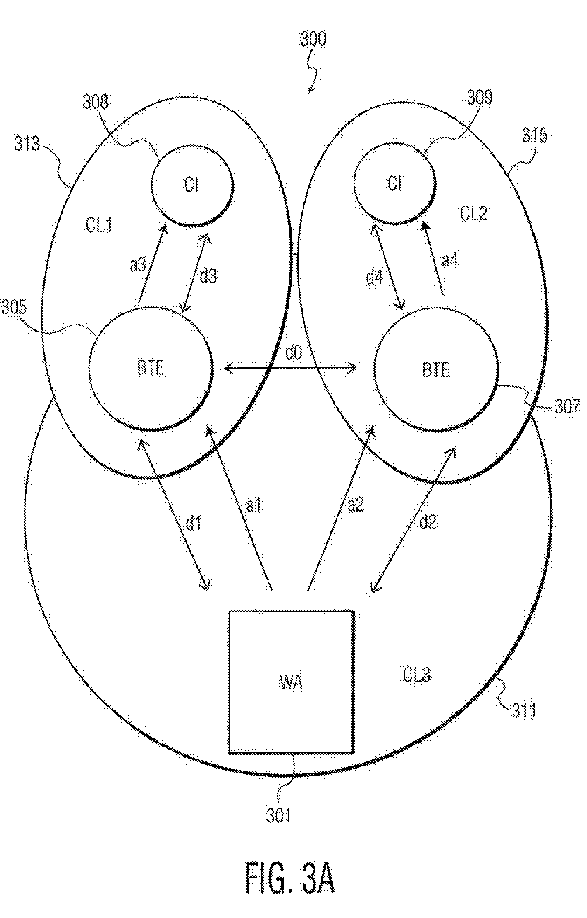

FIG. 3A illustrates an exemplary wireless communications system using multiple clusters in different physical layers. Wireless communications system 300 may be similar to wireless communications systems 100, 200, 230, 260, 270 and may include a wireless assistant 301, BTEs 305, 307, and cochlear implants 308, 309. These devices may be in different clusters, with BTE 305 and Cl 308 in cluster CL1 313, BTE 307 and Cl 309 in cluster CL2 315, and WA 301, BTE305 and BTE 307 in cluster CL3 311

Devices BTE 305 and BTE 307 may belong to two different clusters. In some embodiments, these clusters may each use a different physical layer for communication. For example, clusters CL 313 and CL 315 may use a Magnetic Induction (MI) physical layer (PHY), while cluster CL 311 may use a Radio Frequency (RF) PHY. In the embodiments where devices BTE 305 and BTE 307 are members of two clusters operating in different PHY layers, the BTEs 305, 307 may be used as a communication bridge between devices in the clusters. In these embodiments, a single heterogeneous network configuration may be established between devices in the plurality of clusters. Wireless Assistant 301 may be a mobile phone, music center, remote control, and/or programming device. In some embodiments, the wireless assistant 301 may be a combination of two or more of such devices. In the wireless communications system 300, the WA 301 may, through the BTEs 305, 307 send audio streams to the Cls 308, 309 with a low, end-to-end controllable latency through the plurality of physical layers 311, 313, 315.

Cochlear Implants (Cl) 308, 309 may be devices for audio reception to aid hearing for the user in addition to the BTEs 305, 307. In some embodiments, the Cls 308, 309 may be implanted inside the user. The power consumption of the Cls 308, 309 may be very low; the transmit ranges of the Cls 308, 309 may therefore also be limited due to the low power consumption. Each Cl 308, 309 may only communicate with the BTE of the specific cluster (e.g., Cl 308 with BTE 305, Cl 309 with BTE 307), although in some embodiments, the signals of the Cls 308, 309 may be captured by other devices in other clusters using the same physical layer.

In the illustrative embodiment, the WA 301 may establish a wireless cluster 311 for establishing communications with the hearing aids 305-309 in the wireless clusters 313, 315. In some embodiments, the Cls 308, 309 may not be able to receive data frames from the remote BTE (e.g., BTE 307 for Cl 308) and from the WA 301, and may not be able to transmit data to other devices than to the BTE in its cluster (e.g., BTE 305 for Cl 308). In such embodiments, the BTEs 305, 307 may forward audio streams a1, a2 received from the WA 301 to the Cls 308, 309 through audio streams a3 and a4, respectively. Similarly, the BTEs 305, 307 may establish bi-directional data channels d3, d4 to forward data received from WA 301 through data channels d1, d2, and from the other BTE in data channel d0, and to forward data from Cls 308, 309 to other devices BTE 305, BTE 307 and WA 301.

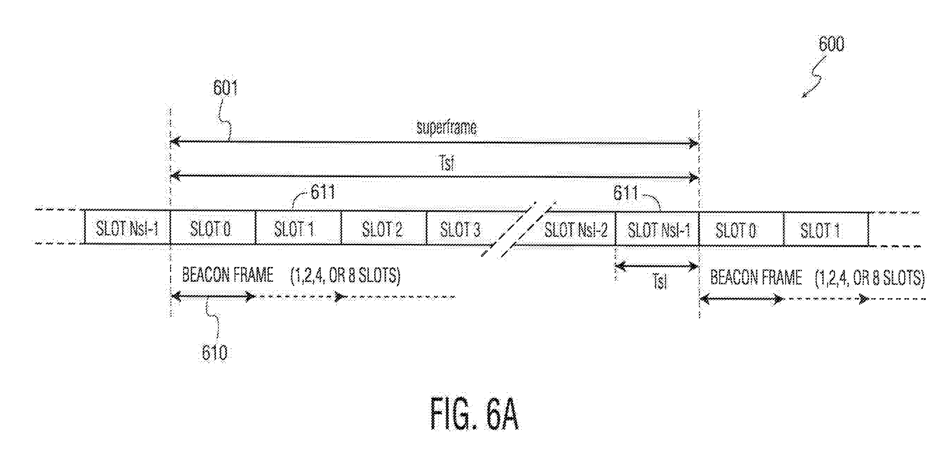

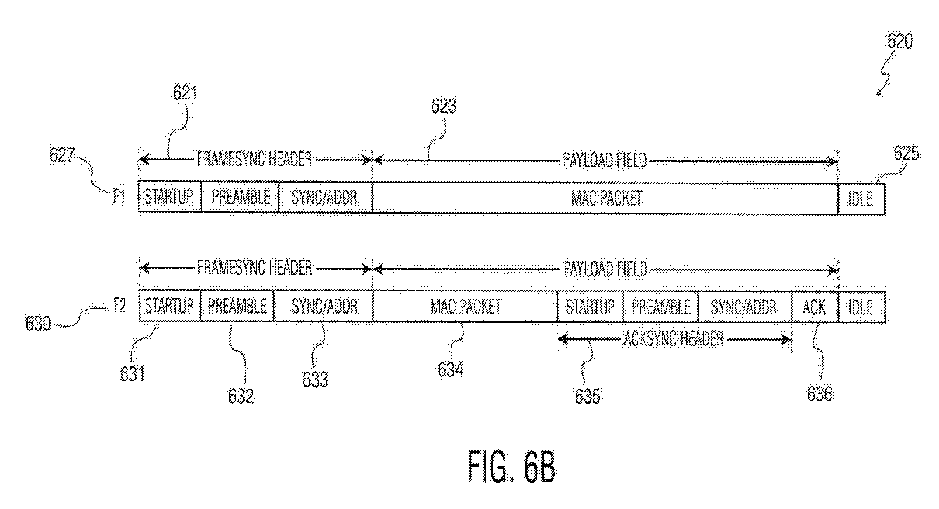

Wireless clusters 311-315 may overlap with each other. In the illustrative embodiments, wireless cluster 311 overlaps with wireless clusters 313, 315, though the wireless clusters 313 and the wireless cluster 315 do not overlap with each other. The illustrative embodiment may require extra data capacity that has to be provided by the physical layer of the wireless link. In some embodiments, the extra data capacity may be achieved by increasing the data rate of the link. In some embodiments, the extra data capacity may be achieved by operating the different clusters at different frequencies. Some embodiments may increase data capacity by using different physical layers. The Media Access Control (MAC) layer may support the forwarding of data packets (that may include audio streams and/or asynchronous data). The MAC layer may also synchronize the data frames in the different clusters, based on the method or methods that discussed below in relation to FIGS. 6-9. In some embodiments, the network configuration may be quasi-static, i.e., the network configuration may only change occasionally, with large time periods between subsequent changes.

In some embodiments, wireless communications system 300 may use the same physical layer (PHY) for each of the clusters 311-315. For example, each of the clusters 311-315 may use Magnetic Induction (MI) for the physical layer. In alternative embodiments, different physical layers may be used for one of the clusters 311-315. For example, an MI link may require less power and may have a limited range, which may result in problems for the connection between the WA 301 and the BTEs 305, 307. Wireless communications system 300 may therefore use a Radio Frequency (RF) physical layer for cluster 311 instead of an MI physical layer, as an RF link can provide a larger range. The RF physical layer may also enable the WA 301 to share information (including data and audio signals) with multiple hearing aid systems.

When the clusters 313, 315 employ a different physical layer than the cluster 311, the BTEs 305, 307 may include both physical layers. For example, when the cluster 311 uses RF and the clusters 313, 315 employ MI, the BTEs 305, 307 may include both MI and RF. In such instances, the BTEs 305, 307 may act as bridging devices, as they are capable of bridging data between both domains and may act in a similar way as when routing data between devices in different clusters using the same physical layer.

In some embodiments, a single MAC controller may be used for both physical layers. In such instances, interfaces have to be provided for both PHYs (e.g., MI and RF). The MAC layer may support the bridging of data packets (e.g., audio streams and asynchronous data) between both domains and synchronize the data frames between the different clusters in order to keep the overall latency for audio applications low and controllable.

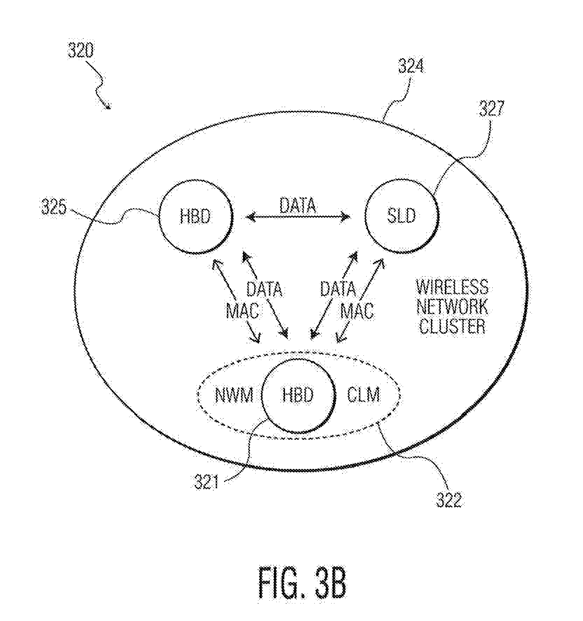

FIG. 3B illustrates an exemplary wireless communications system using a single cluster in the same physical layer. Wireless communications system 320 may contain hybrid devices 321, 323 and slave device 327 in a single cluster 324. In some embodiments, in order to enable unambiguous identification of devices during network association, each device 321-327 may have a unique extended address having a defined length (e.g., 32 or 64 bits).

Once a device 321-327 is associated with a wireless network, it will get an additional short network address for device identification within the network. Such a short address may enable more efficient use of the wireless connections. In some embodiments, a pairing procedure may be employed to ensure a higher degree of privacy. In such an instance, the network manager 322 may maintain a list of paired device lDs that indicate devices that are allowed to join the network. Only devices listed in the paired device list may be allowed to join the network.

Hybrid devices (HBDs) 321, 325 may be devices that contain bi-directional wireless links. In some embodiments, the hybrid device 321, 325 may create and manage a wireless network. For example, the hybrid device 321 may be both a network manager (NWM) and a cluster manager (CLM) 324. Hybrid devices 321, 325 may provide audio and/or data streams to other devices in the same or different clusters. In some embodiments, the hybrid devices 321, 325 may bridge data packets between an MI network and an RF network. In some embodiments, the hybrid device 321, 325 may route data packets between devices that cannot talk directly to each other.

Hybrid devices 321, 325 may operate in a plurality of operational modes. Such operational modes include a bi-directional mode, where the HBD 321 may receive data from at least one other node, such as the HBD 325 or slave device (SLD) 327, in the wireless network and communicate with it.

Another operational mode may be the blaster mode, where the HBD 321 may act as a blaster device (BLD), under which the HBD 321 may operate when it does not detect an existing wireless network. HBD 321 may transmit control data through blaster frames at random instances, with control data included. Any other wireless device (e.g., SLD 327) within the operating range of the HBD 321 that detects the transmitted blaster frames may temporarily suspend its current network connection so that it may receive and process the content of the blaster frames. The other wireless device may then resume its prior activity. HBD 321 may therefore interfere with existing networks when operating in blaster mode, but the interference period may be limited, as only a small amount of data is transferred.

Another operational mode may be the broadcast mode, where the HBD 321 may act as a broadcast device (BCD), under which the HBD 321 may operate when it does not detect an existing wireless network. HBD 321 may transmit streaming data by first attempting to set up its own network. HBD 321 may initiate the wireless network setup by transmitting blaster frames, in a manner similar to the blaster operational mode discussed above. Any other wireless device within operating range of the HBD 321 that detects the blaster frames may temporarily suspend its current network connection in order to receive and process the blaster frame. After processing the blaster frame, the wireless device may resume its previous connection and signal the network manager of the previous connection that the BCD (HBD 321) is present. In some embodiments, the current network manager may shut down the current network so that all devices can re-synchronize to a superframe of the broadcast device. After transmission of the blaster frames and after a subsequent time-out period, the broadcast device may start the transmission of superframes containing the streaming data content.

Devices capable of being a BLD or BCD may operate as a network manager. When no network is detected, the BLD or BCD may create its own network, or may operate in blaster mode or broadcast mode. Hybrid devices 321, 325 may also act as network managers and may create its own network when no network is detected. Hybrid devices 321, 325 may try to operate in bi-directional mode as a default before attempting to operate in blaster or broadcast mode. In some embodiments, blaster mode may be employed for remote control applications. In some embodiments, broadcast mode may be employed for the transmission of streaming data, such as from the WA 301 to the BTEs 305, 307.

Slave device (SLD) 327 may be a device capable of having a bi-directional wireless link. SLD 327 may associate with an existing wireless network, but cannot create and/or manage a network itself. In some embodiments, a hybrid device may operate in a slave mode, for example, when it wants to associate with an existing network. In the illustrative embodiment, SLD 327 may be similar to the BTE 307 operating in a slave mode, while HBD 325 may be similar to BTE 305, with the BTE 305 capable of setting up the wireless network cluster 324. In some embodiments, the SLD 327 may be an implant, such as Cls 308, 309, as SLD 327 may be used in low-power applications. SLD 327 may therefore have a limited range, as to be power-efficient. In some embodiments, the SLD 327 may receive audio and/or data streams and may transmit only sporadically low-rate data. In the illustrative embodiment, the SLD 327 may scan the PHY channels for searching an existing network. SLD 327 may also synchronize with the existing network 324. In some embodiments, SLD 327 may transmit association request messages via the random access communication (RAC) channel of an existing network and provide all device-specific information needed to get associated.

Wireless network cluster 324 may be a single cluster formed when one or more devices in range of each other attempt to form a network. When forming the cluster 322, one of the hybrid devices 321, 325 may act as the cluster manager (CLM) & network manager (NWM) 324. CLM/NWM 322 may create a new wireless network and manage communication in the network. In the illustrative embodiment, HBD 321 may act as CLM/NWM 322. In some embodiments, the CLM and the NWM may be located in separate devices (not shown).

Cluster manager (CLM) 322 may initiate a new wireless network cluster if no active network is found. The CLM 322 may transmit beacon frames and sync frames to enable synchronization of other devices to the new network cluster and may also accept association requests. In some embodiments, the CLM 322 may transmit beacon frames with cluster-specific and superframe-specific information, as scheduled by the network manager. In some embodiments, the CLM 322 may maintain a database including cluster-specific and superframe-specific information. Such information may include the cluster manager device address (CLMDA), the network manager device address (NWMDA), and the time slots allocated for exchanging link control messages between devices.

Network manager (NWM) 322 may handle requests from its host processor or from other devices in the network to get associated with the network. In some embodiments, the NWM 322 may also handle requests from its host processor or from other devices to create logical communication channels between two or more devices. NWM 322 may assign superframe timeslots to communication channels, assign communication channels to devices, and initiate and terminate these communication channels. NWM 322 may also monitor the link control channel or channels for new communication requests. NWM 322 may also ask other HBDs to initiate a local discovery session to verify the existence of hidden devices that may only have a limited operating range. In some embodiments, the NWM 322 may also manage the superframe configuration in a single-frame network. In the illustrative embodiment, NWM 322 may manage the configuration for network cluster 324. In other embodiments, the NWM 322 may synchronize the superframes in a dual-PHY wireless network.

In the illustrative embodiment, the hybrid device 321 may search first for an active network. If such a network is found, it may then attempt to associate with the network. Otherwise, the HBD 321 may then create its own network cluster 324. In some embodiments, upon creation of the network cluster 324, the HBD 321 may become the CLM 322 and NWM 322 of the network cluster 324.

CLM/NWM 322 may thereafter select a network identifier and may also begin sending out beacon frames and sync frames and wait for association requests from other devices. In the illustrative embodiment, HBD 325 and/or SLD 327 may detect the channel activity if activated after HBD 321 and may synchronize to the transmitted beacon and sync frames. In the illustrative embodiment, the SLD 327 may search for an active network. If the network 324 is not found, the SLD 327 may return to low-power standby mode and may search again when it gets re-activated after a given time-out period.

When the SLD 327 finds the network cluster 324, it may then attempt to associate with the network cluster 324 after synchronizing with the transmitted beacon and sync frames. When the SLD 327 becomes associated with the network, the host processor of the HBD 321 may be notified so that it can instruct the NWM 322 to create a communication channel and to initiate a communication session. In some embodiments, the NWM 322 may also schedule sync frames, allocate a connection-less communication channel for exchanging link control messages between associated devices, and/or allocate a random-access communication channel that can be used at any time by new devices that want to get associated with the network.

When the network configuration is finished, the beacon frame may contain at least the network manager device address (NWMDA) and the time slots that are allocated to the connection-less channel and the random access channel. When the network has been configured and the communication channels are allocated, the devices 321-327 may talk to each other in peer-to-peer mode without intervention from the CLM or NWM 322.

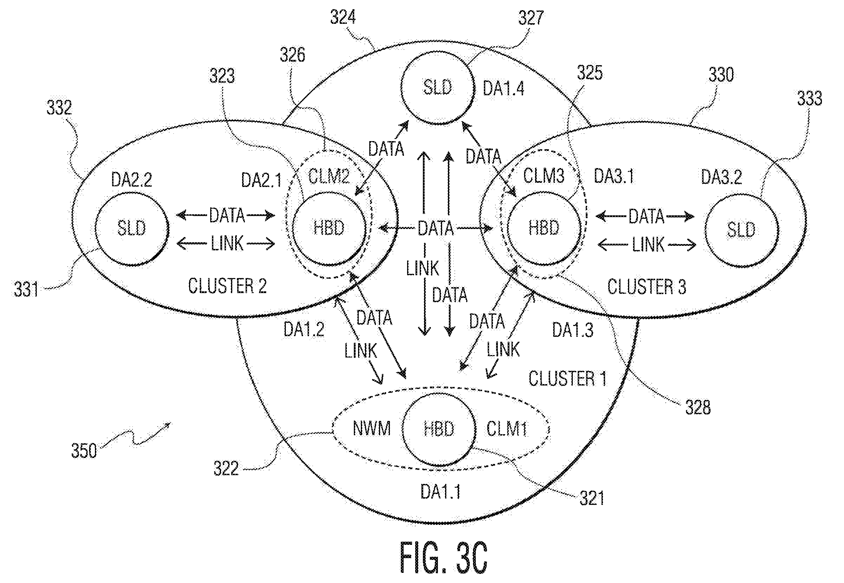

FIG. 3C illustrates another exemplary wireless communications system using multiple clusters in different physical layers. This may occur, for example, when some devices are not discovered when a device establishes a new wireless network. For example, slave devices like cochlear implants that have limited range may not be discoverable by the HBD establishing a new network. Wireless communications system 350 may be similar to communications system 320, including constituent devices HBD 321, HBD 325, and SLD 327 within wireless network cluster 324. Wireless communications system 350 may also include HBD 325, which is also within network cluster 324, SLD 331 that shares cluster 332 with HBD 323, and SLD 333, which shares cluster 330 with HBD 325.

In the illustrative embodiment, the HBD 321 may attempt to transmit an audio stream. When the HBD 321 does not find an active network within its operating range, the HBD 321 may initiate a new wireless network cluster 324. HBD 321 may then start transmitting sync frames and beacon frames to allow other devices that are in range to associate within the network cluster 324. In the illustrative embodiment, HBD 321 may receive association requests from the HBDs 323, 325 and SLD 327; SLDs 331, 333 may not associate within network cluster 324, as they may be out of range and may not be able to send association requests to the HBD 321. NWM 322 may then associate HBDs 323, 325 and SLD 327 to the network cluster 324 and may assign network-specific device addresses to them.

After each association request is received, the HBD 321 may instruct HBDs 323, 325 to transmit beacon frames and sync frames based on a defined schedule, which may allow devices out of the range of HBD 321, yet in the clusters of HBD 323, 325 to send association requests to the HBDs 323, 325. In some embodiments, when the SLDs 331, 333 send association requests to their respective HBDs 323, 325, the HBDs may become cluster managers (CLM) 326, 328 of the respective clusters 332, 330 that may be created when establishing the association. In some embodiments HBDs 323, 325 may inform HBD 321 that the SLDs 331, 333 made an association request and may wait for a response from the HBD 321 before becoming the clusters managers 326, 328. After the association is made, the HBDs 323, 325 may then assign a given network-specific device address to SLDs 331, 333 and route information (e.g., control signals and data) between the SLDs 331, 333 and other devices in their respective network clusters 332, 330. In some embodiments, the NWM 322 may create and distribute routing tables for all devices so that each device knows how it may communicate with any other device in the network.

In the illustrative embodiment, each device may receive at least one network-specific device address (DA). Each device may receive a device address for each cluster 324, 330, 333 in which it operates. For example, using the naming convention of DAx.y, where x represents the wireless cluster address and y represents the device address in the cluster, HBD 323 may have two addresses. The first address of DA1.2 may signify it as the second device in the cluster 324, while the second address of DA2.1 may signify it as the first device in the cluster 332. In some embodiments, the device address may be based on a defined convention, such as order of establishment or distance from the CLM 322.

In some embodiments, all clusters 324, 330, 332 may use the same physical layer operating at the same PHY channel, for example an MI radio. In such instances, only one NWM 322 may be necessary for all clusters, as any messages transmitted by HBDs 323, 325 to SLDs 331, 333 may also be received by other devices in cluster network 324. The messages sent by the SLDs 331, 333, however, may not be received by other devices, as the other devices outside their respective clusters are not likely to receive the messages sent due to the low-power operation of the SLDs.

In alternative embodiments, wireless communications network 350 may be a heterogeneous wireless network, which may occur when at least two clusters use different radio technologies. In some embodiments, different physical layers are used, such as when cluster 324 uses an RF radio and clusters 332, 330 use an MI radio. In such instances, the MI cluster or clusters and RF radio cluster may each have their own network manager. In the illustrative embodiment, HBD 321 may be the CLM 322 of the cluster 324, while HBDs 323, 325 may be the CLM 326, 328 for the clusters 332, 330, respectively. In some embodiments, for example when HBDs 323 and 325 are in range of each other, one of the HBDs 323, 325 may act as the cluster manager 323 for both clusters 332, 330, as they use the same physical layer.

In some embodiments, the network configuration of the wireless communication system 350 may be permanently monitored once installed in order to detect any changes in the network topology. Such changes in topology may include, for example, changing communication capabilities between devices (one device moving out of range, a change in the physical layer for operation, etc.). When such an instance occurs, the network management 322 may update the routing tables and distribute the routing tables to all the devices.

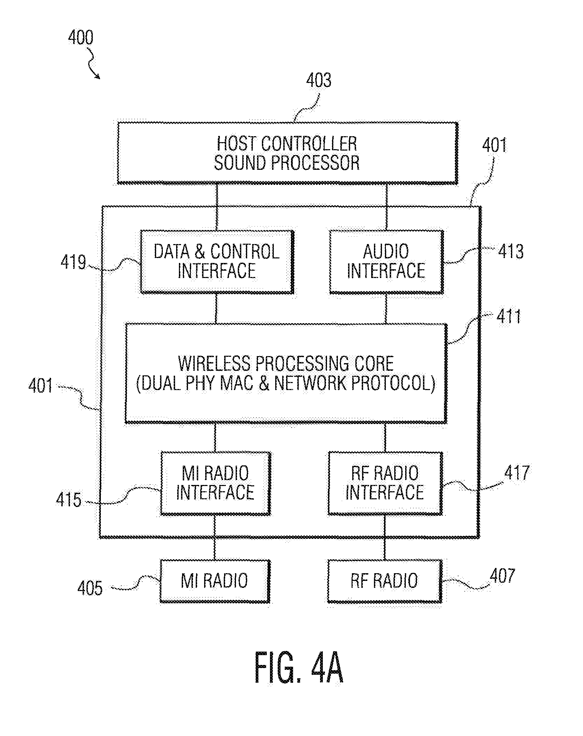

FIG. 4A illustrates an exemplary wireless device including a link controller and a host controller. Wireless device 400 may be defined as a device that contains a wireless link controller 401, a host controller 403 and one or more physical layers 405, 407. The wireless controller 401 may comprise the wireless processing core 411 (with dual PHY and network protocol), audio interface 411, physical interfaces 415, 417 for physical layers 405, 407, and data and control interface 419.

Physical layer devices 405, 407 may be transceivers or other wireless communications devices used to transmit data packets. The illustrative embodiment uses a Magnetic Induction transceiver for the MI radio 405, while using a low-power 2.4 GHz RF transceiver for the RF radio 407. Each physical layer (PHY) may use a specific frame structure to transmit data packets. The frames used for transmission may be processed by PHY-specific MAC sub-layer accelerator blocks, which may be found in the wireless processing core 411.

Wireless link controller 401 may be an application-specific integrated circuit (ASIC) that may process the frames transmitted and received through the physical layers 405, 407. Interface controllers 415, 417 may receive frames from the respective connected physical layer and relay frames between the physical layer and the wireless processing core 411. Each frame may be programmed to operate using at least one set of frame parameters designed for the physical layer in use.

Audio interface 413 and data & control interface 419 may receive processed packets from the wireless processing core 411 and may relay the processed payload to the host controller 403. Audio interface 413 may receive from the wireless processing core the payload within the processed frames that contained audio data. Similarly, the data and control unit 419 may receive from the wireless processing unit 411 the payload within the processed frames that contained control signals or data.

Host controller 403 may be an ASIC or reduced instruction-set computer (RISC) that may be responsible for the overall device control. In some embodiments, the host controller 403 may also control the audio during both pre- and post-processing.

In the illustrative embodiment, the wireless link controller 401 may use MAC and network communication protocols designed for optimum performance with an MI radio. The same protocol used for the MI radio may also be adapted for the RF radio by adding PHY-specific extensions, such as data packet segmentation, re-assembly and RF-specific channel management to the protocol. In some embodiments, the wireless device may use the wireless link controller 401 to bridge between the MI-based network cluster and the RF-based network cluster.

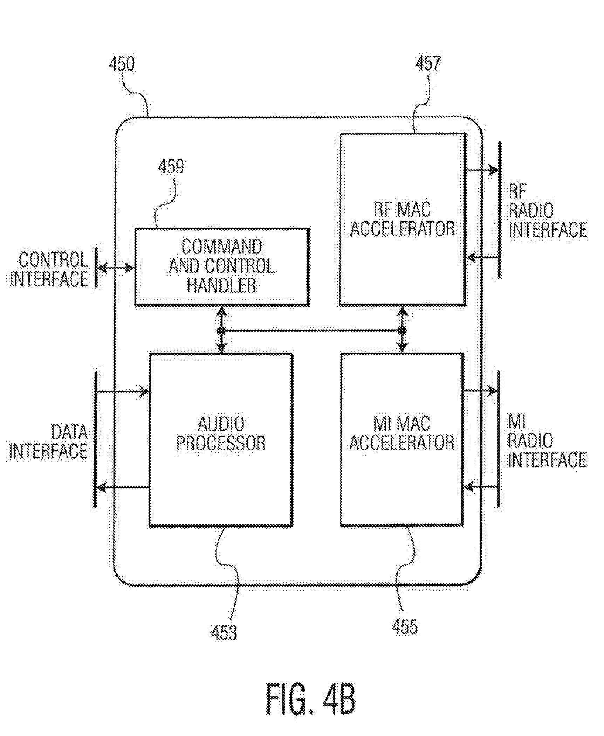

FIG. 4B illustrates an exemplary wireless processing core and components. Wireless processing core 450 may be similar to wireless processing core 411 and may comprise an audio processor 453, an MI MAC accelerator 455, an RF MAC accelerator 457, and a command and control handler 459. In an alternative embodiment, the audio processor 453 may connect to the audio interface. In some embodiments, the wireless processing core 450 may act as a superframe timing processor for the wireless link controller 401.

Audio processor 453 may include an audio encoder, audio decoder, and sample rate adapter. The audio encoder may be used to reduce the bit rate of the audio stream before transmission. The audio decoder may be used to expand a bit stream after reception of an encoded audio stream. The sample rate adaptor may be used when a defined audio output sample rate is imposed by the host. In some embodiments, other circuitry may be in use to implement end-to-end latency control on the audio stream. In some embodiments, the audio processor 453 may have an Integrated Interchip Sound bus (12S)-like interface for communication with the host processor or with an external analog-to-digital converter (ADC) or digital-to-analog converter (DAC).

Command and control handler 459 may control the PHY, MAC and audio blocks. In some embodiments, an Inter-Integrated Circuit (12C) or Serial Peripheral Interface (SPI) bus interface may be used to communicate with the host controller 403. In some embodiments, the command and control handler 459 may route audio streams directly between the audio processor 453 and one of the MAC accelerators 455, 457. In such instances, the wireless link controller 401 may only need to initialize communication channels for the audio stream and for monitoring the QoS of the audio stream.

MAC accelerator blocks 455, 457 may be included for each of the physical layers (PHY), which may connect to a respective interface for a PHY. In some embodiments, MI MAC accelerator block 455 may provide bit clock and frame synchronization. In some embodiments MAC accelerator blocks 455, 457 may provide low-level generation and decoding of MAC frames, forward error correction (FEC) based on Reed Solomon block coding, and verification of cyclic redundancy check (CRC) checksums on the header and data fields of the MAC frame.

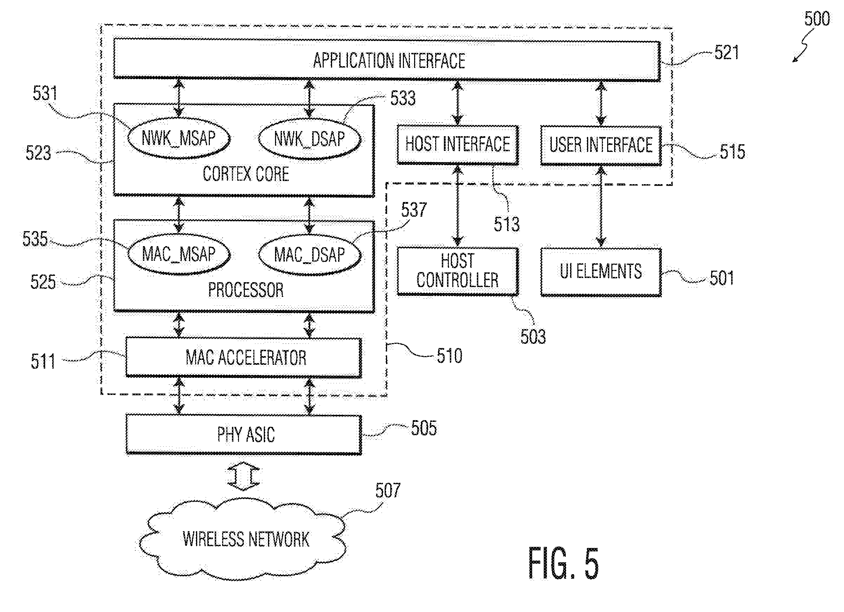

FIG. 5 illustrates an exemplary functional block diagram of the wireless link controller. Wireless link device 500 may include wireless link controller 510, UI elements 501, host controller 503, PHY ASIC 505, and communicate within wireless network 507. Wireless link controller 510 may be an ASIC and may be similar to the wireless link controller 401 of FIG. 4A. Wireless link controller 510 may include MAC accelerator 511, host interface 413, user interface 415, application interface 521, cortex core 523, and processor 525. The cortex core and processor may include management service access points (MSAP) 531, 535 and data service access points (DSAP) 533, 537.

User interface (UI) elements may be hardware elements in the wireless link device capable of enabling interaction between the user and the wireless link device through user inputs and feedback. UI elements may include user input devices, such as keyboards, trackpads, tactile pads, voice activation, and other similar inputs. UI elements may also include devices that display or playback information for the user, such as a display screen or control sound.

Host controller 503 and PHY ASIC 505 may be similar to the host controller 403 and one of the PHY devices 405, 407 of the wireless device 400. Similarly, MAC accelerator 511 may be similar to one of the MAC accelerators 455, 457 of the wireless processing core 450. Host interface 513 and user interface 515 may relay information between the application interface 521 and the respective host controller 503 or UI elements 501.

Application interface 521, cortex core 523, and processor 525 may process different portions of a received frame and may pass other portions of the received frame through the management service access points (MSAP) 531, 535, and data service access points (DSAP) 533, 537. MSAP 531, 535 may be used to control and monitor the different wireless link related functions within a wireless device. DSAP 533, 537 may be used to transfer data between different devices within a wireless network. DSAP messages may be of three different data types, which include link control, asynchronous data, and streaming data. The link control data type may be used to transfer data between wireless link devices 510. Link messages may be exchanged between the wireless link controllers of two or more devices. The asynchronous data type may be used for asynchronous data streams between host processors. The streaming data type may be used for audio or low latency data streams between the host processors. Data messages may be exchanged between host processors of two or more devices.

FIG. 6A illustrates an exemplary superframe structure of the MAC protocol. Superframe structure 600 includes superframe 601 that is made from beacon frame 610 and time slots 611. In some embodiments, data packets that are exchanged between wireless devices that are configured according to the wireless link protocol may be transmitted through Media Access Control (MAC) frames that are organized in a superframe structure. The allocation of MAC frames to a plurality of timeslots used by the system may be organized by the Network Manager 322.

Superframe 601 may be a MAC frame that may be subdivided into two or more timeslots. In the illustrative embodiment, superframe 601 includes beacon frame 610 and *Nsl -* 1 timeslots 611, where *Nsl is* equal to the default number of time slots per superframe.

Beacon frame 610 may be used in the superframe 601 to indicate the start of a new superframe. Beacon frame 610 may start at the beginning of time slot 0. In some embodiments, beacon frame 610 may be of variable length and may occupy multiple time slots. For example, in the illustrative embodiment, the beacon frame may occupy four slots by starting in slot 0 and occupying also slots 1, 2, and 3.

**Table 1 Example of default superframe parameters**

| Superframe Parameter | Default Value |
|---|---|
| Default time slot length | *Tsl =* 322.15 µs |
| Default number of time slots per superframe | *Nsl* = 256 |
| Default superframe length | *Tsf* = *Nsl × Tsl* = 82.47 ms |

As disclosed above in Table 1, the number of time slots per superframe (*Nsl*, the time slot length (*Tsl*, and the superframe length (*Tsf*) may have a programmable default value. The values in table 1 may be exemplary default values for a superframe using an MI protocol with a default channel rate of 298 kbps. The default values may be set to efficiently use the wireless medium, while maintaining a low latency for the audio streams.

FIG. 6B illustrates exemplary MAC frame formats for the MAC protocol. MAC frame 620 may start at the beginning of a time slot and may comprise a framesync header 621 and payload field 623. In some embodiments, the MAC frame structure may also include an idle field 625. Frame sync header 621 may comprise a startup field 631, a preamble field 632, and a sync/address field 633. Payload field 623 may comprise a MAC packet 634. In some embodiments, the payload field 623 may also include an acksync header 635 and an acknowledgement (ACK) field 636. The payload field 623 may be variable in length. MAC frame structure 620 includes two different MAC frames: MAC frame F1 627 and MAC frame F2 630. In some embodiments, the frame format and the length of the MAC packet may be indicated in the MAC packet header.

MAC frame 620 may have a frame type. Frame types include data frames, beacon frames, sync frames, and blaster frames. In some embodiments, data frames may act as sync frames. Data frames may be used to transmit streaming data (e.g., audio) or asynchronous data. Beacon frames may be used to indicate the start of the superframe 601. Sync frames may be used to enable tuning and synchronization of the physical layer (e.g., MI). Blaster frames may be the MAC frames used when a wireless link device is transmitting in blaster mode. When operating in blaster mode, may transmit blaster frames at random instances, with control data included with the blaster frame. Another device within range may, upon receipt of the blaster frame, temporarily suspend any existing network connections in order to receive and process the content of the blaster frame. After processing, the other device may then resume its previous network connection and previous activity.

MAC frame F1 627 may include a payload field 623 comprised only of the MAC packet 634. In contrast, MAC frame F2 630 may include a payload field 623 of MAC packet and an acknowledgement (ACK) packet of a fixed length. The ACK message may be returned by the MAC accelerator 511 when the CRC verification of the preceding MAC packet is successful. This may enable the sender of the MAC packet to immediately check if its message has been received successfully. For MAC frame F2 630, the PHY may have to switch from receive mode to transmit mode after reception of the MAC packet 634. The ACK packet may therefore include the acksync header 635 and the ACK field 636. The acksync header 635 does not have to start at the beginning of a time slot, as it may be considered part of the MAC frame payload field 623.

Startup field 631 may represent the time needed to switch from standby mode to active RX or TX mode, or to switch from one mode to the next. Startup field 631 may also include the time needed by a PLL tuning circuit to reach the locked status. The startup field 631 may be PHY-specific. Preamble field 632 may be a bit sequence used to synchronize the data clock recovery system in the receiver with the incoming bit stream. Preamble field 632 may be PHY-specific and may be typically one byte long. In some embodiments, the preamble field 632 may be the bit sequence "01010101 " or "10101010." Preamble field 632 may be selected in such a way that the last bit of the preamble is the complement of the first bit of the sync word, which may ensure that there are a maximum number of transitions in the preamble. This maximum number of transitions may improve the performance of the clock synchronization system.

Sync/address field 633 ("sync field") may be used to indicate the start of the MAC packet 634 or the ACK packet 636, and to get the correct word alignment for the packets 634, 636. In some embodiments, the sync/address field 633 may be used by the MI radio 405 to identify different frame classes, such as CRC frames, FEC frames, and blaster frames. In some embodiments, the RF radio 407 may use the sync/address field 633 as a device address. In these instances, the sync/address field 633 may be PHY-specific. In some embodiments, in order to get reliable sync/address field detection, correlation of the incoming bit stream with the candidate sync/address patterns may be done within a window indicating the expected arrival time of the sync patterns. This may reduce the probability of false sync/address word detection. In some embodiments, the wireless link controller 510 may know the expected arrival time.

Payload field 623 may contain MAC packets with the actual data to be transmitted. In some embodiments, the payload field may also include an acknowledgement field. MAC packets 634 may encapsulate network packets that contain the actual data to be transmitted. Examples of such actual data may be audio samples, user interface data, application-specific isochronous or asynchronous data packets, link control messages, and software images. In some embodiments, the content of the MAC packet 634 and the ACK packet 636 may be PHY-independent.

Idle field 625 may indicate the gap between the end of the MAC frame and the start of the next time slot 611. In some embodiments, hardware may switch to standby mode in order to save power.

In some embodiments, a link controller may support two physical layers. Each physical layer may have its own PHY-specific data link packet format that has to be used for transmitting data. A data link packet may include a packet header, followed by a packet payload field. The packet payload field may have a PHY-specific maximum size. For example, the RF radio 407 may have a maximum MAC packet size of 256 bits. Its data link packet may have the same format as the MAC frames 620. The RF MAC frame may be generated and processed by the RF MAC accelerator block 457. In some embodiments, the RF MAC accelerator block 457 may also do pre-processing and post-processing of the MAC packets, such as segmentation and re-assembly, and may provide the interface with the RF radio.

In some embodiments, when the RF radio 407 is used, the RF data frame may be generated by the RF radio 407. RF MAC accelerator 457 may provide the conversion between the MAC frame 620 and a data link format used by the RF radio 407. In some embodiments, the RF MAC accelerator 457 may also do pre-processing and post-processing of the MAC packets, and may also provide the interfacing with the RF radio. In some embodiments, the packet payload may be static, but may be reconfigured by the wireless link controller 401. In some embodiments, CRC checking may be disabled so that no CRC bytes are transmitted. In some embodiments, the wireless link controller handles the error detection, error correction, and/or retransmission requests instead of the RF radio 407.

**Table 2 Example of default values of MAC frame parameters**

| **MAC Frame Parameter** | **MI Radio (channel rate = 298 kbps)** | | **RF Radio (channel rate = 2 Mbps)** | |
|---|---|---|---|---|
| Frame Format | F1 | F2 | F1 | F2 |
| Startup Field | 33.56 µs | 33.56 µs | 130 µs | 130 µs |
| Preamble Field | 8 bits | 8 bits | 1 byte | 1 byte |
| Sync/Address Field | 16 bits | 16 bits | 3-5 bytes | 3-5 bytes |
| Payload Field | | | | |
| Frame Class | 0 bits | 0 bits | 1 byte | 1 byte |
| Payload Type 0 | 62 bits | 14 bits | 7.75 bytes | 1.75 bytes |
| Payload Type 1 | 158 bits | 110 bits | 19.75 bytes | 13.75 bytes |
| Payload Type 2 | 350 bits | 302 bits | 32 + 11.75 bytes | 32 + 5.75 bytes |
| Payload Type 3 | 734 bits | 686 bits | 2 × 32 + 27.75 bytes | 2 × 32 + 21.75 bytes |
| ACK packet | Absent | 14 bits | Absent | 1.75 bytes |
| Idle | 0 µs | 0 µs | See Table 3 | See Table 3 |

Table 2 defines four MAC payload types defined for use in various wireless clusters. Each of the four types may include one of four payload field sizes. The values used as defaults may fill completely an integer number of superframe time slots when an MI radio 405 is used that is operating at a default channel rate of 298 kbps and default superframe parameters (see Table 1). In this table, the ACK packet 636 has a fixed length of 14 bits. The startup, preamble, and sync/address field sizes of the acksync header 635 are not shown explicitly in the table, as they may have a value similar to fields of the framesync header 621, which are included in the table.

In some embodiments, the MI radio 405 may use a specific sync/address word for each frame class (CRC, FEC, and blaster frames). When an RF radio 407 is used, the frame class may be indicated by an additional byte. In some embodiments, the last byte of a MAC packet may include additional bits to indicate that packet types 2 and 3 are segmented and have to be re-assembled.

**Table 3 MAC frame duration for MI radio and RF radio with default parameters (MI channel rate = 298 kbps; RF channel rate = 2 Mbps, RF radio address field = 5 bytes)**

| **Payload Type** | **Payload Size** | **Length Frame Formats F1 & F2 (MI Radio)** | | **Length Frame Format F1 (RF Radio)** | | **Length Frame Format F2 (RF Radio)** | |
|---|---|---|---|---|---|---|---|
| 0 | 62 bits | 322.15 µs | 1 slot | 190 µs | 0.5 9 slots | 328 µs | 1.02 slots |
| 1 | 158 bits | 644.3 µs | 2 slots | 238 µs | 0.74 slots | 376 µs | 1.17 slots |
| 2 | 350 bits | 1288.6 µs | 4 slots | 488 µs | 1.51 slots | 626 µs | 1.94 slots |
| 3 | 734 bits | 2577.2 µs | 8 slots | 834 µs | 2.59 slots | 972 µs | 3.02 slots |

Table 3 discloses the duration of MAC frames for various payload types, for both frame formats and both physical layers, using default superframe and channel rate settings. When the MI radio is used, the MAC frame duration may be an integer number of time slots for both frame formats and for all four payload types, so that the idle time of each MI MAC frame may be zero when the payload is completely filled. However, when an RF radio is used the MAC packets may be transmitted in a shorter time than needed by the MI radio, as the RF channel rate is higher than that of the MI radio 405.

For example, when MAC frame F1 627 is used, the capacity of the RF radio may be at least twice as high as the capacity of the MI radio (except for payload type 0). In some embodiments, when an RF MAC frame gets the same number of time slots allocated than a corresponding MI MAC frame, MAC frames with payload types 1, 2, or 3 may be transmitted twice within the allocated time slots. Retransmission of MAC frames may be used to reduce the probability of packet errors. In alternative embodiments, fewer time slots may be allocated for the transmission of an RF MAC frame so that there is room to transmit more data via the RF physical layer.

As another example, when MAC frame type F2 is used and when the RF MAC frame gets the same number of time slots allocated than the corresponding MI MAC frame, there may be sufficient time to transmit an acknowledgement package for the payload types 1, 2 and 3.

In some embodiments, communication channels may be used for data transfer between different devices. A communication channel may be a collection of time slots that are allocated to the respective devices and can be used by MAC frames to exchange information. The time slots are allocated by a superframe scheduler of the MAC layer. In an exemplary embodiment, communications are scheduled in such a way that receiving devices are only activated when they are expecting data addressed to them, and that transmitting devices are only activated when they know that devices are listening to them. Communication channels may be assigned to services, such as link management, audio streaming, data streaming, QoS monitoring, status and control messages, and user interface messages.

Connection-oriented communication (COC) channels may be used for audio applications and for transmission of data packets at regular instants, such as once per superframe. An example may be conducting Quality of Service (QoS) monitoring of audio services. When receiving a request for a COC channel with given parameters, the Network Manager may assign timeslots to this COC channel and may initiate a connection between the source and destination devices. The assigned timeslots may now be reserved for this channel until the related service terminates. When a COC channel is initiated, link control frames may be used to exchange all connection-related parameters between the relevant devices so that the beacon frame does not need to communicate any additional information and the frame payload does not need to include address information. By default, the beacon frame may be transmitted to all devices in a COC channel that starts at timeslot 0 of every superframe.

Connection-less communication (CLC) channels may be used for transmission of short messages at irregular instants, such as during configuration of a COC channel. When a CLC channel is activated, the time slots assigned to this channel may be announced by means of a message in the beacon frame. When such a message is detected, all devices may then monitor the CLC channel. In some embodiments, source and destination addresses may be included in the frame transmitted via the CLC channel. In some embodiments, to provide reliable data transfer, successful reception of the frame may be acknowledged, and the message may be retransmitted when no acknowledgement is received. When the data transfer is finished, the CLC channel may then close, with an announcement in the beacon frame, which may trigger devices to stop listening to the CLC time slots.

Scheduled access communication (SAC) channels may be used for transmission of a data burst, or for the transmission of low rate data, having an average data frame rate that is lower than the superframe rate. In the latter case, several devices may have access to the same SAC channel, but in different superframes. The access grant mechanism may be based, for example, on a superframe ID included in the beacon frame that is updated every superframe. Access scheduling may be transmitted via a CLC channel by means of link control messages. In some embodiments, if needed, the access scheduling may be reconfigured by means of dedicated reconfiguration messages; for example, when a new device joins the network. A scheduled access channel may have the advantage that no address information has to be provided in the payload (except during configuration) and that every device knows when to transmit and when to listen. When devices are not scheduled for transmit or receive, they can stay in standby mode.

Random access communication (RAC) channels may be used when devices are not yet associated, or when data transmission is only needed occasionally. For example, connection request messages may be sent through an RAC channel from new devices that want to associate with an existing network. In addition, user interface messages may be sent through RAC channels from devices that are not assigned to a SAC channel. A RAC channel may be very power efficient for the transmitting end, but not for the receiving end. In some embodiments, the transmitter may only be activated when new data has is transmitted. The receiver may listen to an RAC channel in every superframe, as it may not be known when a new data packet will be transmitted. In this instance, the source and destination addresses may be included in the payload of the data frame, and the message may be acknowledged by the destination device to verify if it is correctly received.

Within the communications channels, devices may transfer signals in different ways. Such ways include broadcast communication, which is used when a device attempts to send a message to all devices within its range. In some embodiments, the beacon frame is transmitted in broadcast mode. Alternatively, point-to-point (P2P) communication may be used for the transfer of data between two specific nodes. The source and destination address may be included in the frame header, unless a COC or SAC channel is used. In some embodiments, link control frames use this communication mode for transmission via a CLC channel. Point-to-multipoint (P2MP) communication may be used for the transfer of data between a source node and a few specific destination nodes. In some embodiments, P2MP may be used for multi-casting of audio streams to specific devices by means of a COC channel. In some embodiments, source and destination addresses may be communicated when the COC channel is initialized.

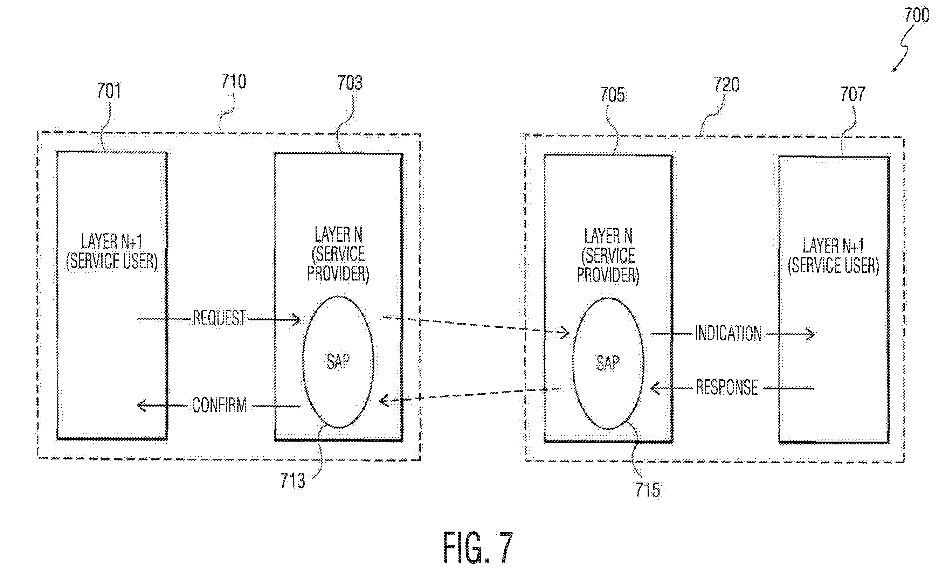

FIG. 7 illustrates the service flow of service primitives between peer protocol entities. Wireless communications system 700 includes two systems 710, 720 that may use communications channels between internal layers and between devices. System 710 may include layers 701 and 703 (including SAP 713), while system 720 may include layer 705 (including SAP 715) and 707. The communications protocol that communicates in a layered architecture may use P2P communications with its remote protocol entity. Communication between adjacent layers in the same device may be managed by service primitives between the layers. Service primitives may perform a plurality of actions, such as Connect, SendData, ReceiveData, and Disconnect. A service primitive may specify the action to be performed or provide the result of a previously requested action. In some embodiments, a service primitive may also carry parameters needed to perform its functions, such as a pointer to a data buffer or a data structure in a memory in the wireless link controller 401.

In the illustrative embodiment, four primitive types are used for communication between layers. Primitives may be sent through service access points (SAP) 713, 715. The request primitive may be sent to request a service. In some embodiments, it may invoke the service and pass any required parameters. The indication primitive be sent to advance the activation of a requested service, or may indicate an action initiated by the layer. The response primitive may be sent in response to an indication primitive and may acknowledge or complete an action previously invoked by the indication primitive. The confirm primitive may be sent to acknowledge or complete an action previously invoked by a request primitive.

**Table 4 Example use cases of data transfer between clusters**

| **Use Case** | **PHY cluster 1** | **PHY cluster 2** | **Data forwarding mechanism** |
|---|---|---|---|
| A | MI radio | MI radio | Receive data in a given channel (timeslot set 1) and retransmit these data in another channel (timeslot set 2). Both clusters use the same superframe. |
| B | RF radio or MI radio | MI radio or RF radio | Receive data transmitted via the superframe of cluster 1 and retransmit these data via the superframe of cluster 2. The superframes of both clusters should be synchronized with each other. |

Table 4 discloses two examples of communications between clusters. Communication between clusters may depend on the characteristics of the physical layers used in the clusters.

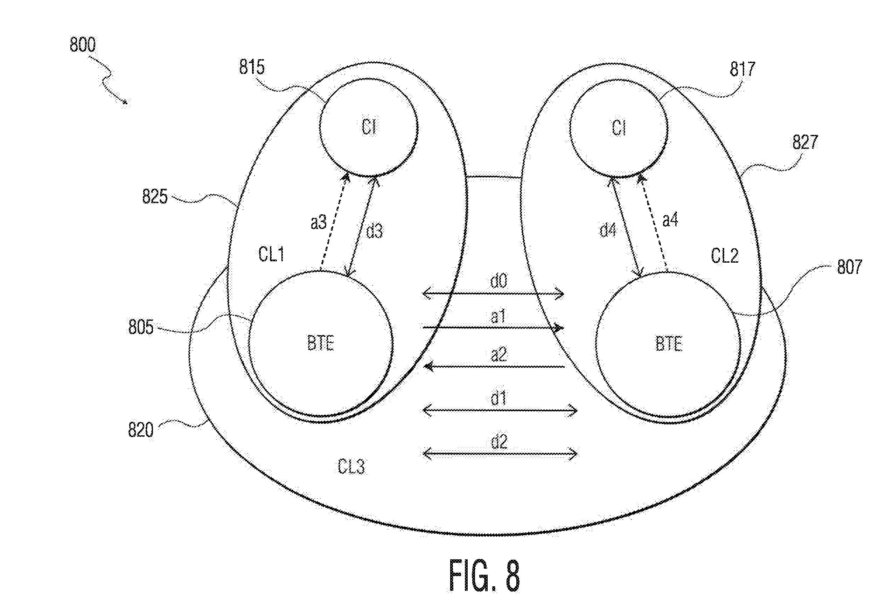

FIG. 8 illustrates an exemplary use case for communication between clusters. Wireless communications system 800 may be similar to wireless communications system 300, but without the WA 301. Network clusters 820, 825, and 827 may be similar to network clusters 311, 313, 315, BTEs 805, 807 may be similar to BTEs 305, 307, and Cls 815, 817 may be similar to Cls 308, 309.

In one embodiment, Cls 815, 817 may reliably receive audio and data packets from both BTEs, but data packets transmitted by the Cls 815, 817 may only be captured by the BTE in its clusters. In this instance, BTE 805 may only transmit audio stream a1, while BTE 807 may only transmit audio stream a2. BTEs 805 and 807 may communicate with each other via data channel d0. In some embodiments, Cls 815, 817 may be lower power devices, so their transmit range is limited to the clusters 825, 827, respectively. As a result data channel d3 may only be received by BTE 805 and data channel d4 may only be received by BTE 807. When BTE 807 requires information from Cl 815, data channel d3 may need to be routed by BTE 805 to BTE 807 through another set of time slots (e.g., data channel d1). In another embodiment, the channel allocated to data channel d3 may be configured as a shared SAC channel for data channels d1 and d3.

In another embodiment Cls 815, 817 may reliably receive audio and data packets only from the BTE 805, 807 in its cluster. In this instance audio streams a3 and a4 may be used to stream audio to Cls 815, 817. Audio streams a3, a4 may use the same time slots if the signal received by the Cl 815, 817 from the BTE 805, 807 in its cluster is significantly stronger that the signal from the remote BTE. When at least three audio channels are needed, the audio sample rate may be selected so that three or more audio channels fit into one superframe, together with at least one data channel (that may be shared) and any channels needed for link management.

In another embodiment, referring back to wireless communications system 300, clusters 313, 315 may be MI, while cluster 311 may be RF. In this instance, the BTEs 305, 307 need dual-PHY (i.e., MI & RF) to enable simultaneous communication with both clusters. In some embodiments, there may be one network manager for the RF cluster and a network manager for each MI cluster. Superframes of clusters 313, 315 may be synchronized with each other to allow latency control on the audio streams to the both clusters 313, 315. The network manager of the MI network may schedule the time slot allocation in both MI clusters so that mutual interference is avoided. In some embodiments, the audio source may be located in a wireless assistant device 301. In this instance the superframes for clusters 313, 315 may be synchronized with the superframe in cluster 311.

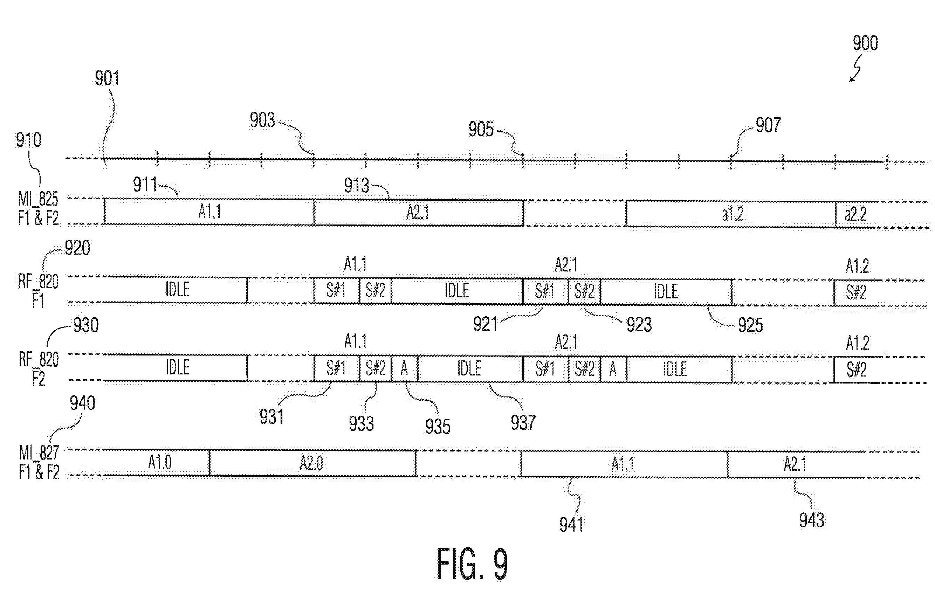

FIG. 9 illustrates an exemplary MAC frame structure for frame segmentation in a heterogeneous network. When communicating between networks, clusters use the same timeslot length and the same number of time slots in order to synchronize superframes. In addition, the start of a MAC frame may be aligned with the start of a time slot, and the beacon frames of the different clusters may have a fixed time relation with each other. For example, if there is a time offset between two beacon frames, the time offset is a fixed number of time slots within the superframe. Meanwhile, channel rates and frame durations may be cluster-specific.

Time sequence 900 may be an example of superframe synchronization between an RF cluster and an MI cluster for MAC frame formats F1 or F2. Timing synchronization may be controlled by a superframe timing processor. In some embodiments, the superframe timing processor may be a component within the wireless core processor 450. In the illustrative embodiment, payload type 2 is used, as it may be segmented when translated to RF data link packets. When F2 is used, an additional RF data link packet may be needed for the ACK message. In the illustrative embodiment, MAC frames 910, 920, 930 each start their respective MAC frames at time slot edges 901, 903, 905, and 907. In this embodiment, the default channel rate (i.e., MI = 298 kbps, RF = 2 Mbps) may be used, with a timeslot duration of 322.15 µs.

When translating from MI to RF, MAC frame 911 may be fragmented into at least two segments 931, 933. Similarly, MAC frame 913 may be fragmented into segments 921, 923, with idle segment 925 used for the rest of the superframe duration. In some embodiments, MAC frames 911, 913 may be audio streams from separate devices sharing a common channel, divided through TDMA. In some embodiments, the idle time period 925, 937 may be used to retransmit the RF frame once. In other embodiments, the idle time period 925, 937 may be used to allocate time slots to other channels. In some embodiments, ACK message 935 may be added to the RF message. This may shorten the idle time and in some embodiments, may prevent retransmission of the RF message.

Time slot edges 901, 903, 905, and 907 may be set by a superframe scheduler. In some embodiments, the superframe scheduler may also be a timing processor in the superframe timing processor. The superframe scheduler may first sync the master clock of the MAC layers. This may ensure that each MAC layer shares a common time slot edge 901. The superframe scheduler may then lock all the clock frequencies for the MAC layers. Finally, the superframe scheduler may calibrate the MAC phases through the addition of specific idle times for each MAC layer, so that each MAC layer may share common time slot edges 903, 905, and 907. In some embodiments, the MAC frames 911, 913 and time slot edges 901, 903, 905, 907 may be allocated such that there is sufficient capacity to support the rate of an encoded audio stream. In some embodiments, the allocated time slots may be distributed evenly in order to lower end-to-end latency.

In an exemplary embodiment, MAC frames 921, 923 may start in timeslot 905, which is located as close as possible to the start of MAC frame 913 in timeslot 903. MAC frames 921, 923 may located as close as possible to the start of MAC frame 913 in order to, for example, minimize the end-to-end latency for an audio stream or data stream that is transmitted from a source device, such as like Cl 815 via bridging device BTE 805 to destination device BTE 807.

The superframe scheduler may, upon receipt of an incoming MAC superframe 913, synchronize an outgoing MAC superframe 921, 923 so that the two superframes are synchronized in frequency and phase. After receipt of the first superframe 913, the superframe scheduler may then transmit the second superframe 921, 923 as close as possible to the first superframe 913. As can be seen from FIG. 9, the second superframe may be sent at timeslot 905, as this is the closest timeslot to the complete receipt of MAC frame 913. Similarly, the superframe scheduler of a similar device in the RF cluster may receive the second superframe 921, 923 and may create a third superframe 943 synchronized in frequency and phase with the second superframe 921, 923 and may allocated the next available timeslot as close as possible to the beginning of the second superframe 921, 923 for the transmission of the third superframe 943, which is timeslot 907 (due to the processing of MAC frame 941).

It should be apparent from the foregoing description that various exemplary embodiments of the invention may be implemented in hardware and/or firmware. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a personal or laptop computer, a server, or other computing device. Thus, a machine-readable storage medium may include read-only memory (ROM), random-access memory (RAM), magnetic disk storage media, optical storage media, flash-memory devices, and similar storage media.

In summary then, various embodiments relate to a system and related method that enable transfer of control and data messages in a wireless communication network between devices operating on different physical layers (PHY). Control data and/or isochronous data and/or asynchronous data may be transferred between devices that operate on different physical layers through a bridging device, while minimizing latency and buffering. The bridging device may contain interfaces that may operate on each of the respective physical layers. A first interface may receive a first superframe from a device in a first physical layer (PHY1) and may generate an equivalent second superframe to transmit to a second device on a second physical layer (PHY2). The bridging device may also synchronize the time slots and reference clocks for communication protocols on each physical layer to further minimize latency and buffering during the transfer of control and data messages via communication frames within these superframes.

Further aspects of the disclosure are provided in the following series of lettered clauses:
A) A system that enables communication between at least two physical (PHY) layers, the system comprising:
   a first communication device (D1) in a first cluster (C1) operating in a first physical layer (PHY1);
   a second communication device (D2) in a second cluster (C2) operating in a second physical layer (PHY2); and
   a bridging device operating in both PHY1 and PHY2 and capable of communication with D1 in PHY1 and D2 in PHY2 comprising:
      a first interface operating in PHY1 that communicates with D1;
      a second interface operating in PHY2 that communicates with D2; and
      a superframe timing processor comprising:
         a first superframe interface that receives a first superframe comprising first data and first superframe timing information from the first interface,
         a superframe handler that extracts the first superframe timing information from the first superframe and generates a second superframe comprising second superframe timing information, wherein the second superframe is synchronized with the first superframe and the second superframe timing information is equivalent to the first superframe timing information, and
         a second superframe interface that forwards the second superframe to the second interface, wherein the second superframe is synchronized in frequency and phase with the first superframe.
B) The system of clause A, wherein the superframe timing processor further comprises:
   a timing synchronizer that:
      locks a second frequency for the second superframe with a first frequency for the first superframe to synchronize the duration of the second superframe with the duration of the first superframe, and
      locks a second phase for the second superframe with a first phase for the first superframe to synchronize the beginning of a second superframe in the PHY2 with the beginning of a first super frame in the PHY1.
C) The system of clause A, wherein the bridging device further comprises:
   a data processor that extracts first data from the first superframe and adds second data to the second data frame, wherein the second data includes the first data.
D) The system of clause A, wherein the PHY1 and PHY2 are one from the following list: a Magnetic Induction wireless link (MI) or a Radio Frequency wireless link (RF).
E) The system of clause B, wherein at least one data frame transmitted in the second superframe is synchronized in frequency and phase with at least one data frame received in the first superframe.
F) The system of clause B, wherein at least one data frame transmitted in the first superframe is synchronized in frequency and phase with at least one data frame received in the second superframe.
G) The system of clause B, further comprising:
   a third communication device (D3) in C1 operating in PHY1, wherein D3 in communication with D1 and not in communication with D2 or the bridging device; and
   a fourth communication device (D4) in C2 operating in PHY2, wherein D4 is in communication with D2 and not in communication with D1, D3, or the bridging device.
H) The system of clause C, wherein D3 uses the first superframe and D4 uses the second superframe.

It should be appreciated by those skilled in the art that any block diagrams herein represent conceptual views of illustrative circuitry embodying the principals of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the spirit and scope of the invention. Accordingly, the foregoing disclosure, description, and figures are for illustrative purposes only and do not in any way limit the invention, which is defined only by the claims.

## Claims

1. A bridging device that enables communication between at least two physical layers (PHY), the device comprising:
a first interface operating in a first physical layer (PHY1) that communicates with a first communication device (D1) in a first cluster (C1) operating in the PHY1;
a second interface operating in a second physical layer (PHY2) that communicates with a second communication device (D2) in a second cluster (C2) operating in the PHY2; and
a superframe timing processor comprising:
a first superframe interface that receives a first superframe comprising first data and first super frame timing information from the first interface,
a superframe handler that extracts the first superframe timing information from the first superframe and generates a second superframe comprising second superframe timing information, wherein the second superframe is synchronized with the first superframe and the second superframe timing information is equivalent to the first superframe timing information, and
a second superframe interface that forwards the second superframe to the second interface, wherein the second superframe is synchronized in frequency and phase with the first superframe.

2. The bridging device of claim 1, wherein the superframe timing processor further comprises:
a timing synchronizer that:
locks a second frequency for the second superframe with a first frequency for the first superframe to synchronize the duration of the second superframe with the duration of the first superframe, and
locks a second phase for the second superframe with a first phase for the first superframe to synchronize the beginning of a second superframe in the PHY2 with the beginning of a first superframe in the PHY1.

3. The bridging device of claim 1, further comprising:
a data processor that extracts first data from the first superframe and adds second data to the second data frame, wherein the second data includes the first data.

4. The bridging device of claim 1, wherein PHY1 and PHY2 are each one from the following list: a Magnetic Induction wireless link (MI) or a Radio Frequency wireless link (RF).

5. The bridging device of claim 2, wherein at least one data frame transmitted in the second superframe is synchronized in frequency and phase with at least one data frame received in the first superframe.

6. The bridging device of claim 2, wherein at least one data frame transmitted in the first superframe is synchronized in frequency and phase with at least one data frame received in the second superframe.

7. The bridging device of claim 5, wherein:
the payload of the at least one data frame received in the first superframe through the PHY1 is transmitted in the second superframe through the PHY2.

8. The bridging device of claim 5, wherein:
the payload of the at least one data frame received in the second superframe through the PHY2 is transmitted in the first superframe through the PHY 1.

9. A method of a bridging device enabling communication between at least two physical layers (PHY), the method comprising:
receiving, by a first superframe interface in a superframe timing processor, a first superframe comprising first data and first super frame timing information from a first interface operating in a first physical layer (PHY1) that communicates with a first communication device (D1) in a first cluster (C1) operating in the PHY1;
extracting, by a superframe handler in the superframe timing processor, the first superframe timing information from the first superframe;
generating, by the superframe handler, a second superframe comprising second superframe timing information synchronized with the first superframe, wherein the second superframe timing information is equivalent to the first superframe timing information; and
forwarding, by a second superframe interface in the superframe timing processor, to a second interface operating in a second physical layer (PHY2) that communicates with a second communication device (D2) in a second cluster (C2) operating in the PHY2.

10. The method of claim9, further comprising:
locking a second frequency for the second superframe with a first frequency for the first superframe to synchronize the duration of the second superframe with the duration of the first superframe, and
locking a second phase for the second superframe with a first phase for the first superframe to synchronize the beginning of a second superframe in the PHY2 with the beginning of a first super frame in the PHY1.

11. The method of claim9, further comprising:
extracting, by a data processor in the superframe timing processor, first data from the first superframe; and
adding, by the data processor, second data to the second data frame, wherein the second data includes the first data.

12. The method of claim9, wherein PHY1 and PHY2 are each one from the following list: a Magnetic Induction wireless link (MI) or Radio Frequency wireless link (RF).

13. The method of claim 10, wherein at least one data frame transmitted in the second superframe is synchronized in frequency and phase with at least one data frame received in the first superframe.

14. The method of claim 10, wherein at least one data frame transmitted in the first superframe is synchronized in frequency and phase with at least one data frame received in the second superframe.

15. The method of claim 10, further comprising:
transmitting the payload of the at least one data frame received in the first superframe through the PHY1; and
transmitting the payload of the at least one data frame in the second superframe through the PHY2.
